# FASCICULE DE BREVET EUROPEEN

(11) **EP 2 575 427 B1**
(45) Date de publication et mention de la délivrance du brevet: **07.03.2018**
(21) Numéro de dépôt: 11730720.7
(22) Date de dépôt: 01.06.2011
(51) Int. Cl.: A01G 31/00, A01G 9/10

(54) **SUBSTRAT DESTINÉ À SERVIR DE SUPPORT DE CULTURE ET APPLICATION À LA RÉALISATION NOTAMMENT DE SURFACES SPORTIVES**
SUBSTRATE FÜR BEPFLANZUNG UND IHRE VERWENDUNG ZUR HERSTELLUNG VON SPORTFLÄCHEN IM SPEZIELLEN
SUBSTRATE INTENDED TO ACT AS A CULTIVATION SUPPORT AND USE FOR THE PREPARATION IN PARTICULAR OF SPORT SURFACES

(30) Priorité: 01.06.2010 FR 1002299
(43) Date de publication de la demande: 10.04.2013
(60) Demande divisionnaire: 18154131.9
(73) Titulaire: Dendro Concept, 91730 Mauchamps (FR)
(72) Inventeur: PICARD, Edmond-Pierre, 91910 Saint Sulpice de Favières (FR)
(74) Mandataire: Lavoix
(86) Numéro de dépôt international: PCT/FR2011/000325
(87) Numéro de publication internationale: WO 2011/151542

(56) Documents cités:
- WO-A1-2008/155528
- US-A1- 2003 230 027

## Description

Substrat destiné à servir de support de culture et application à la réalisation notamment de surfaces sportives.

La présente invention concerne un substrat destiné à servir de support de culture notamment pour du gazon naturel, en particulier pour réaliser une surface sportive en gazon naturel destinée à la pratique sportive du football, du rugby, ou des sports hippiques comme la course de galop ou de trot, le polo, le saut d'obstacle et le dressage, par exemple.

La surface classiquement utilisée pour ces nombreux sports est l'herbe, plus précisément le gazon naturel : celui-ci est reconnu comme la surface idéale à la belle saison, mais qui présente cependant l'inconvénient d'être sensible aux conditions climatiques et de ne pas supporter une fréquentation intensive sans se détériorer quand les conditions ne sont pas favorables, notamment en cas de précipitations ou de gel.

Pour pallier cet inconvénient, on a pensé à remplacer le gazon naturel par des surfaces artificielles et notamment le gazon synthétique pour le football ou le rugby et, pour les pistes ou les manèges ou les carrières hippiques, par des surfaces synthétiques à base de sable, notamment siliceux, éventuellement associé à des éléments tels que treillis, fibres, cendres, éléments synthétiques broyés, paraffine et tous éléments imaginés pour augmenter la cohésion de la piste ou diminuer sa sensibilité au gel ainsi que son besoin d'arrosage.

Mais ces surfaces présentent cependant des inconvénients importants par rapport aux surfaces en gazon naturel, tant sur le plan écologique que d'un point de vue de l'économie, du confort d'utilisation, de l'agrément des joueurs et du voisinage et de la sécurité du jeu.

En effet, le gazon naturel participe, comme toutes autres plantes, à l'environnement par la photosynthèse, agit comme un véritable climatiseur à énergie solaire, en maintenant la température du sol à 20°C environ alors que la température des surfaces synthétiques atteint 60°C au soleil, et participe enfin à l'épuration de l'air et de l'eau en absorbant les poussières fines ; à l'inverse, les surfaces synthétiques ne piègent ni saletés ni poussières mais en produisent, larguent des produits dans la nature, sentent mauvais en été et posent un problème de recyclage. Sur le plan économique également, le prix d'une surface sportive en gazon, ramené à l'heure d'utilisation, est avantageux du fait que l'investissement est plus faible et plus durable que pour des surfaces en synthétique, qui doivent être changées au bout de 10 ans. Un autre avantage très important du gazon par rapport aux surfaces synthétiques, est l'agrément et de la sécurité des joueurs : le gazon, d'une part, permet de rendre le sol assez ferme pour être portant et restituer de l'énergie et ménager ainsi les muscles des sportifs et, d'autre part, permet au sol de rester suffisamment plat et rebondissant et simultanément assez souple pour amortir la course et ménager les articulations des sportifs. Le gazon ménage ainsi les muscles des sportifs et/ou des animaux.

Malgré leurs inconvénients décrits ci-dessus en comparaison du gazon naturel en conditions idéales, les surfaces de substitution au gazon naturel se développent au détriment de ce dernier, avec le « gazon synthétique » pour les terrains de football, les sables et fibres ou textiles ou broyats pour les carrières et les manèges : en effet, le gazon naturel présente l'inconvénient rédhibitoire de ne pas être en toutes circonstances dans un état correct. Cet inconvénient est aujourd'hui ressenti comme un handicap inacceptable et pesant plus lourd que tous les autres avantages (économiques, écologiques et de santé) du gazon naturel en comparaison des surfaces artificielles.

Pour remédier à ces inconvénients de manque de tenue du gazon en période humide, on a déjà proposé d'adjoindre de nombreux éléments aux substrats de culture du gazon et notamment des treillis de fibres plastiques puis des fibres synthétiques grossières et enfin, dernièrement, des fibres synthétiques « fines ».

De même que le béton a été armé et renforcé par des treillis de métal à grosse maille (béton armé) puis par l'adjonction de fibres synthétiques relativement fines (d'un diamètre supérieur ou égal à 100 µm) puis par des fibres dites micro-fibres (d'un diamètre supérieur ou égal à 50 µµ), de même des propositions d'adjonction de fibres ont été faites pour les substrats de culture de gazon avec des bandelettes de filets de polypropylène (tels que ceux commercialisés sous la marque déposée Netlon) puis par adjonction de fibres de plus en plus fines, celles justement disponibles sur le marché car utilisées pour armer le béton.

Par ailleurs, pour améliorer la résistance d'un sol de substitution au gazon essentiellement constitué de sable, il a déjà été proposé d'y incorporer des fibres plus fines que celles utilisées dans le béton. Il est par exemple connu (document FR-2.707.03-A) qu'on peut obtenir un sol sportif artificiel sans gazon, résistant au cisaillement grâce à un mécanisme proche de celui de la résistance donnée au sol par des racines de gazon, par l'incorporation d'une dose pondérale de 1 à 5 ‰ de fibres de section fine (5 à 20 µ) et de relativement faible longueur (4 à 75 mm) dans un substrat essentiellement sableux d'une granulométrie comprise entre 10 µm et 20 mm avec une dose comprise entre 1 et 5 ‰ en dosage pondéral. Un substrat composée de sable et fibres est connu du document EP-A-1108685 Ces adjonctions sont de plus en plus efficaces pour « armer » un sol de substitution, à l'instar du béton : on obtient en effet un sol atteignant de bonnes performances en termes de résistance au cisaillement, mais, malheureusement, cette amélioration de la résistance est atteinte au détriment de la souplesse.

Pour remédier à l'inconvénient d'un sol gélif et aussi pour apporter plus de souplesse à la surface de gazon, il a été récemment proposé l'adjonction de granulés de liège et plus spécialement de liège cuit en granulométrie grossière (> 3 mm), en granulométrie moyenne (500 µµ à 3 mm) et en granulométrie fine (< 500 µµ) pour conférer à un substrat de culture auquel il est incorporé des caractéristiques améliorées de résistance au gel par le double effet du caractère isolant du liège et de sa résilience qui lui permet « d'encaisser » l'augmentation de volume de l'eau sous l'effet du gel et sous l'effet de perméabilité conféré par les particules grossières de liège. Le liège présente en même temps l'intérêt de conférer au substrat légèreté, souplesse et résistance à la compaction par sa densité et son caractère résilient. De plus, si les gros grains améliorent la perméabilité du substrat, les petits grains de liège, non gonflants eux aussi, offrent une grande capacité de rétention d'eau capillaire du fait de la forte tension de surface du liége et du rapport entre leur surface et leur volume.

Cependant, si l'incorporation du liège permet d'améliorer la souplesse et le bon comportement en cas de gel, surtout dans le cas d'adjonction de particules grossières, ceci est fait au détriment de la cohésion et de la résistance au cisaillement du substrat, surtout dans le cas d'adjonction de particules grossières.

Aussi un des buts de la présente invention est-il de fournir un substrat destiné à servir de culture notamment pour du gazon naturel, qui permet de réaliser une surface sportive en particulier en gazon naturel acceptable pour toute discipline sportive.

Un autre but de la présente invention est de fournir un tel substrat très résistant, très souple, très drainant, résistant au gel et non affecté par de très fortes précipitations.

Ces buts, ainsi que d'autres qui apparaîtront par la suite, sont atteints par les caractéristiques de la revendication 1. De préférence, l'ensemble de toutes les particules de dimension supérieure à 180 µm ou inférieure à 100 µm représente moins de 1000 grammes par litre de substrat.

Selon un premier mode de réalisation de la présente invention, pour une proportion volumique PV de particules résilientes P_{R>100} inférieure à 5 %, la somme du dosage D_{F} des fibres fines et du dosage D_{Al} de toutes les autres inclusions de la quatrième partie est supérieure à 0,5 g/litre de substrat et 20 g/litre de substrat.

Selon un deuxième mode de réalisation de la présente invention, pour une proportion volumique PV de particules résilientes P_{R>100} supérieure à 5% et la somme du dosage D_{F} des fibres fines et du dosage D_{Al} de toutes les autres inclusions de la quatrième partie est supérieure à 1g/litre de substrat.

Selon un troisième mode de réalisation de la présente invention, pour une proportion volumique PV de particules résilientes P_{R>100} comprise entre 5 % et 60 %, le dosage D_{F} des fibres fines est supérieur à 1 g/litre de substrat, et la somme du dosage D_{F} des fibres fines et du dosage D_{Al} de toutes les autres inclusions de la quatrième partie est inférieure à 80 g/litre de substrat.

Selon un quatrième mode de réalisation de la présente invention, pour une proportion volumique PV de particules résilientes P_{R>100} supérieure à 60 %, la somme du dosage D_{F} des fibres fines et du dosage D_{Al} de toutes les autres inclusions de la quatrième partie est compris entre 7 g/litre de substrat et 40 g/litre de substrat.

Selon un cinquième mode de réalisation de la présente invention, pour une proportion volumique PV de particules résilientes P_{R>100} inférieure à 60 %, la somme du dosage D_{F} des fibres fines et du dosage D_{Al} de toutes les autres inclusions de la quatrième partie est compris entre 2 g/litre de substrat et 80 g /litre de substrat

Selon un sixième mode de réalisation de la présente invention, pour une proportion volumique PV de particules résilientes P_{R>100} supérieure à 60 %, la somme du dosage D_{F} des fibres fines et du dosage D_{Al} de toutes les autres inclusions de la quatrième partie est compris entre 5 g/litre de substrat et 200 g /litre de substrat.

Avantageusement, les particules dures de la première partie sont des grains de sable siliceux.

De préférence, les particules résilientes P_{R} de la première partie sont des grains de liège.

Avantageusement, les éléments corpusculaires de la deuxième partie sont constitués d'argile, de limon, de sable dont la granulométrie est inférieure à 100 µm, de matière organique, d'éléments poreux fins tels que de la poudre de zéolithe, de corail ou de diatomées.

De préférence, les éléments corpusculaires de la deuxième partie ayant une dimension inférieure à 20 µm représentent moins de 60 g/l de substrat et les éléments corpusculaires ayant une dimension inférieure à 100 µm représentent moins de 300 g/ de substrat.

Selon une variante de réalisation, les éléments corpusculaires de la deuxième partie ayant une dimension inférieure à 80 µm représentent moins de 45 g/l de substrat.

Avantageusement, les fibres fines de la troisième partie sont des fibres creuses en polyester d'un diamètre compris entre 10 µm et 20 µm.

De préférence, au moins 20% des fibres de la troisième partie sont enrobées d'un produit hydrophobe lubrifiant, tel que, par exemple, du silicone.

Avantageusement, plus de 50% du poids des fibres fines de la troisième partie est constitué par des fibres fines dont le diamètre est inférieur à 10% de la granulométrie moyenne des particules dures de ce substrat.

De préférence, la proportion volumique PV des particules résilientes P_{R>100} dans le substrat est supérieure à 5% et inférieure à 60 %, et plus de 50% du poids des fibres fines de la troisième partie est constitué par des fibres fines dont le diamètre est inférieur à 10% de la granulométrie moyenne des particules dures.

Dans le cas où les particules dures sont des grains de sable, d'une part, plus de 80% en poids de ces grains présente une granulométrie comprise entre 200 µm et 400 µm, et, d'autre part, les fibres fines de la troisième partie sont des fibres creuses de polyester, d'un diamètre compris entre 12 et 30 µm et siliconées en surface.

Un substrat selon la présente invention permet la réalisation, éventuellement in situ, de surfaces sportives, de surfaces de terrasse, de milieu pour la transplantation de végétaux ou de culture de gazon en bande.

Selon un mode de réalisation préféré, la surface sportive est constituée par des bacs juxtaposés, limités par des parois, et remplis du substrat à une hauteur au moins égale à celle de ces parois.

La description qui va suivre et qui ne présente aucun caractère limitatif, permettra à l'homme du métier de mieux comprendre non seulement les avantages de la présente invention, mais aussi sa mise en oeuvre et ses applications.

Un substrat selon la présente invention destiné à servir de support de culture, notamment à un gazon, comprend :
- une première partie, constituant le squelette du substrat et représentant plus de 70 % du volume total du substrat, composée de particules P_{>100} d'une granulométrie supérieure à 100 µm, l'ensemble de ces particules étant constitué de particules dures P_{D>100} et/ou de particules résilientes P_{R>100}, ces particules résilientes P_{R>100} constituant une proportion volumique PV comprise entre 0% et 100 % en volume de cette première partie ;
- une deuxième partie d'éléments corpusculaires P_{<100} plus petits que 100 µm, cette partie constituant de 0 à 450 grammes par litre du substrat ;
- une troisième partie, constituant de 0 à 200 grammes par litre du substrat, composée de fibres fines d'une longueur comprise entre 3 mm et 100 mm et d'un diamètre compris entre 5 µm et 35 µm ;
- une quatrième partie, constituant de 0 à 200 grammes par litre du substrat, composée d'autres inclusions allongées et/ou surfaciques, chacune de ces inclusions allongées ou surfaciques ayant au moins une de leurs dimensions largement supérieure à la granulométrie des particules de la première partie, et la somme des doses de la troisième partie et de la quatrième partie étant supérieure à 3 grammes par litre du substrat.

Il sera ici rappelé que la présente invention doit permettre de répondre aux différentes conditions suivantes :
- le substrat doit présenter un volume poral de pores de grandes dimension correspondant à de l'eau gravitaire aussi important que possible, ce qui s'obtient avec des particules de grande taille mais avec en même temps une réserve utile d'eau la plus grande possible, ce qui s'obtient par des éléments de petite taille et à forte tension de surface ;
- des fibres disponibles en quantité suffisante et à un prix compatible avec l'application ;
- des fibres satisfaisant aux exigences du principe de précaution en matière de risques pour la santé s'il y a inhalation de micro-fibres ;
- des fibres qui participent, le cas échéant, à l'augmentation de la réserve d'eau capillaire utile pour la levée puis la pousse du gazon ou des plantes cultivées dans le substrat.

Il a été montré de façon surprenante qu'on peut obtenir un sol compatible avec la culture du gazon, relativement satisfaisant sur le plan de la propreté et très satisfaisant pour un sol dont le taux des particules d'une granulométrie inférieure à 20 µm est inférieur à 60 gramme/litre de substrat et dont le taux des particules d'une granulométrie inférieure à 100 µm est inférieur à 300 gramme/litre de substrat : la surface ainsi obtenue présente une relative perméabilité.

Selon un autre mode de réalisation de l'invention, on choisit les éléments corpusculaires de la deuxième partie ayant une dimension inférieure à 80 µm représentent moins de 45 g/l de substrat : la surface ainsi obtenue présente une grande perméabilité

Pour respecter le principe de précaution, et pour ne présenter aucun risque vis-à-vis de la santé des personnes devant les manipuler pour la constitution du substrat et dans tout le cycle de vie du substrat, on sait qu'un diamètre de micro-fibre supérieur à 3 microns est considéré comme le diamètre maximum qui peut être inhalé, qu'un diamètre de 6 microns est le diamètre au-dessus duquel la législation actuelle ne classe pas les fibres en fonction d'un danger potentiel pour la santé : on a considéré de façon préférentielle qu'un diamètre de 10 microns permet de garder une importante marge de sécurité. On a non seulement considéré la dimension des fibres incorporées mais aussi leur devenir dans la durée et la façon dont elles peuvent ou non se décomposer en fibrilles plus fines. A cet égard, les fibres déjà connues en polyester ne peuvent pas se décomposer en fibres plus petites du fait de leur mode de fabrication et sont reconnues inoffensives vis-à-vis de l'environnement et de la santé : elles permettent de respecter le principe de précaution. Les fibres de polyester de diamètre supérieur à 10 µm sont compatibles avec ces mesures de précautions et sont disponibles couramment sur le marché. Un diamètre minimum prudent de 10 µm correspond à une fibre creuse en polyester d'un titrage de 1,15 dtex et un diamètre minimum de 6 µm correspond à un titrage de 0,4 dtex.

Pour permettre à une fibre de se mouvoir avant de se tendre dans un réseau poral lors d'un cisaillement, deux possibilités sont envisageables :
- soit les grains sont en sable rigide, alors il faut en coupe que le diamètre de la fibre soit plus petit que le diamètre du trou entre trois grains contigus dans le plan formé par le centre de ces trois grains (comme le fil qui passe dans le chat d'une aiguille) : si une fibre a un diamètre supérieur à 1/5 du diamètre de trois grains contigus, ces grains doivent s'écarter pour laisser passer la fibre sans l'écraser et il n'y a donc aucun degré de liberté pour la fibre dans ces conditions.
- soit les grains entre lesquels se love la fibre sont en grains résilients et en particulier s'il s'agit de grains de liège : la condition de dimension de la fibre par rapport à la dimension du grain de liège n'est pas nécessaire dans la mesure où la fibre en appuyant sur le grain résilient va écraser celui-ci sans s'opposer au mouvement de cisaillement et l'ensemble reprend sa place après l'effort.

Cependant, comme la granulométrie des substrats selon l'invention n'est pas homométrique et comme une fibre, qui est très longue par rapport à la dimension d'un grain de sable, passe par de très nombreux pores sur son parcours et comme le diamètre de la fibre doit lui permettre de ne pas être « accrochée » trop souvent sur son parcours, il faut une importante différence de diamètre entre le passage délimité par trois grains et le diamètre d'une fibre (pour fixer les idées, une fibre de 3 cm de longueur correspond à 100 fois la dimension d'un grain de sable de 300 µµ). Cela dépend non seulement du diamètre de la fibre, mais aussi de sa souplesse (qui augmente quand le diamètre diminue) et de sa lubrification et bien sûr de la répartition statistique des dimensions des passages dans la porosité en fonction de la répartition granulométrique du sable ; si l'on peut donner aisément un diamètre en milieu homométrique au delà duquel on sait que la fibre est coincée, il n'est pas aisé de déterminer de façon théorique un diamètre en dessous duquel la fibre va glisser dans la porosité avant de se tendre et de bloquer le mouvement.

Les essais menés ont montré de façon surprenante qu'on peut obtenir un effet macroscopique satisfaisant lorsqu'au moins 50% des fibres ont un diamètre inférieur à D50/10, et très satisfaisant pour un diamètre inférieur à D50/20, D50 étant le diamètre de grain au-dessous duquel on a 50 % des grains de sable du substrat, c'est-à-dire que l'ensemble des particules dures de dimension inférieure à D50 représente la moitié du poids de toutes les particules dures : autrement dit, plus de 50% du poids des fibres fines de la troisième partie est constitué par des fibres fines dont le diamètre est inférieur à 10% de la granulométrie moyenne des particules dures. Cette condition est particulièrement avantageuse dans le cas où la proportion volumique PV des particules résilientes P_{R>100} dans le substrat est supérieure à 5% et inférieure à 60%.

Pour l'aspect de la souplesse et pour l'efficacité de blocage de la fibre, il est préférable d'avoir un diamètre aussi petit que possible ; mais plus la fibre est longue, plus il est difficile de garder de la souplesse, plus il est facile de bloquer le substrat et plus il est difficile d'incorporer la fibre dans le substrat.

On commence à avoir une efficacité sensible pour une longueur de fibre égale à 5mm mais, il est préférable d'avoir une longueur supérieure à 20mm et les résultats s'améliorent quand la longueur de fibre augmente. Une fibre de 60mm est très efficace et il serait souhaitable d'avoir des longueurs de fibres jusqu'à 100 ou 200mm ou peut être même plus mais on n'a pas réussi à les incorporer dans les essais menés récemment car l'incorporation des fibres est de plus en plus difficile lorsque la longueur augmente.

D'autres essais ont montré, de façon surprenante, qu'on peut obtenir un effet macroscopique satisfaisant pour une fibre d'un diamètre inférieur à D30/10 et très satisfaisant pour un diamètre inférieur à D30/20, D30 étant le diamètre de grain au-dessous duquel on a 30 % en poids des grains durs du substrat.

De façon préférable, on préfère un petit diamètre de fibre pour obtenir à la fois un meilleur blocage et une plus grande souplesse ; mais on constate que plus le diamètre est petit, plus il est difficile de séparer les fibres entre elles et de les mélanger au substrat, ce qui fait chuter l'efficacité des fibres.

Compte tenu de ces éléments, l'expérience montre qu'on obtient un résultat satisfaisant dans un sable d'une granulométrie comprise entre 200 µm et 1000 µm pour une fibre polyester creuse d'un diamètre entre 12 et 30 µm, correspondant à un titrage compris entre 1,6 dtex et 34 dtex.

Les fibres siliconées ont l'avantage de mieux « coulisser » dans la porosité du sable grâce à un « manchon » de gouttelettes qui résulte de l'hydrophobie induite par l'enrobage de silicone : c'est un effet positif pour la souplesse du substrat pour un diamètre de fibre donné. A l'inverse, cependant, coulissant mieux, elles sont de ce fait moins efficaces pour maintenir le sable.

Il est donc préférable de n'utiliser les fibres siliconées que dans le cas de fibres longues, de préférence pour des fibres de longueur supérieure à 3cm.

De plus, la fibre siliconée ne retient pas l'eau par capillarité et le fait d'utiliser une telle fibre siliconée devrait donc en principe diminuer la réserve utile.

Or, tout au contraire, on s'est rendu compte, de façon surprenante, que l'utilisation de fibres hydrophobes telles que des fibres siliconées, est un moyen extrêmement efficace pour retenir de l'eau dans la porosité quand le diamètre de la goutte d'eau sur la surface hydrophobe de la fibre est supérieur à la dimension du passage entre trois grains de sable diminué du diamètre de la fibre, car l'eau qui rentre dans cette cavité et se regroupe sous la forme d'une grosse goutte du fait de l'hydrophobie de la fibre ne peut plus ressortir par le passage emprunté par la fibre.

Dans la pratique, on a constaté de façon surprenante qu'une fibre hydrophobe, par exemple une fibre siliconée, dans un sable dont le D50 est inférieur à 500 µm, confère au substrat un comportement hydrique particulièrement favorable au développement du gazon.

Ainsi, une fibre siliconée dans un sable de D50<500 µm et plus particulièrement dans un sable de D50<350 µm, présente le double intérêt d'une lubrification permettant l'incorporation de la fibre à la porosité de ce sable, cette incorporation étant d'autant plus difficile que la sable est fin et de créer une synergie tout à fait nouvelle entre une porosité de granulés hydrophiles et une fibre de surface hydrophobe pour piéger de l'eau dans la porosité, cette eau étant très facilement utilisable par la racine des plantes poussant dans le substrat.

Compte-tenu de ces éléments, l'expérience montre qu'on obtient un résultat particulièrement satisfaisant tant sur le plan mécanique que sur le plan de la pousse du gazon, compte-tenu d'une bonne réserve utile et d'une bonne capillarité dans un sable d'une granulométrie comprise entre 200 µm et 400 µm et pour une fibre polyester creuse siliconée d'un diamètre compris entre 12 et 30 µm.

L'expérience montre qu'on obtient des résultats encore meilleurs avec une fibre non siliconée mais qu'il est plus difficile de bien l'incorporer et que l'efficacité chute si elle n'est pas bien incorporée. Pour des longueurs de fibres de moins de 80mm, cependant, le choix des fibres non siliconées est une possibilité intéressante si l'on dispose de moyens d'incorporation particulièrement efficaces.

On peut aussi utiliser de la fibre polyester issue de la récupération industrielle avec du tissu de coton.

Il est possible de supprimer le coton qui ne joue pas de rôle mécanique positif important et encore moins de rôle mécanique positif durable, du fait qu'il est biodégradable. Mais il est apparu, de façon surprenante, que le coton, étant extrêmement hydrophile, apporte une réserve d'eau très intéressante au début de la vie du substrat, au moment crucial de l'implantation du gazon par semis ou de l'implantation des plantes sur une terrasse ou encore pour la transplantation de gros arbres.

De même, il est apparu de façon surprenante que les fibres, qui ne sont pas individualisées, sont moins efficaces pour le rôle initialement prévu consistant à renforcer mécaniquement le substrat. Mais ces fibres non individualisées qui sont apparues inopinément dans le processus de fabrication sous la forme de petites pelotes peu esthétiques, se sont révélées intéressantes pour donner une sorte de structure au substrat qui ressemble à la structuration en mottes d'un sol naturel.

Si les fibres sont hydrophiles mais également, de façon plus inattendue, si elles ne sont pas hydrophiles mais siliconées, les pelotes se sont de façon surprenante révélées très efficaces pour créer des réserves utiles en eau dans lesquelles se concentrent prioritairement les jeunes radicelles lors d'un semis ; et, de plus, il est apparu de façon inattendue que ces pelotes s'opposent de façon efficace à la pénétration d'un crampon par exemple, comme les chignons de cheveux protégeaient les guerriers en empêchant un sabre même aiguisé de couper la nuque. On s'est également aperçu, de façon inattendue que ces pelotes occupent un volume important, susceptible de s'écraser sur lui-même et de reprendre son volume : elles constituent finalement une sorte de particule légère, isolante, aérée, à forte réserve d'eau et résiliente.

Trop nombreuses, cependant, ces pelotes ou éléments surfaciques, en plus d'être particulièrement inesthétiques en surface, rendent surtout extrêmement difficile la mise en place du substrat et l'égalisation de la surface ; et, de plus, elles peuvent finir par diminuer la cohésion de l'ensemble si des surfaces de glissement continues peuvent se constituer d'une pelote à l'autre. En outre, d'une efficacité mécanique presque nulle par rapport à celle des fibres individualisées, ces fibres en motte, si elles sont plus nombreuses que nécessaire augmentent le prix du substrat sans avantage mécanique.

C'est pourquoi selon la présente invention, le dosage de ces éléments surfaciques ne doit pas représenter plus de 75% du dosage (D_{F} + D_{Al}) de toutes les inclusions des troisième et quatrième parties.

De façon surprenante, on s'est aperçu que la dose maximum de fibres qui peut être mélangée au substrat, est très considérablement supérieure si le substrat comprend une part prépondérante de liège ou de matière résiliente par rapport au sable ; et, on s'est même rendu compte, de façon encore plus surprenante, qu'il est possible de constituer un substrat dont le liège constitue la partie essentielle, le sable étant soit absent, soit très largement minoritaire en dosage volumique (par exemple une dose de sable inférieure à 30 %) : ce substrat à base de liège est, contre toute attente, pour un même dosage de fibres encore plus résistant au cisaillement qu'un substrat essentiellement composé de sable.

Ainsi, on s'est aperçu, de façon totalement inattendue, qu'un substrat essentiellement constitué de liège peut admettre une dose de fibre beaucoup plus élevée, du fait que la fibre ne bloque pas la machine qui mélange fibre et liège en créant un cisaillement grâce à la capacité de résilience du liège qui s'écrase pour passer là où le sable se bloquerait dans le processus de fabrication.

Dans un tel mélange, selon l'invention, grâce aux grains de liège qui maintiennent séparées les fibres (qui sinon s'agglomèrent et se compactent), celles ci constituent, en mélange avec du liège, et au même titre que ce dernier, un constituant à part entière du substrat, léger, isolant, résilient, capable de retenir de l'eau capillaire.

On a constaté que, de façon encore plus surprenante, le liège et la fibre, en partie en pelote et en partie en brins individualisés, constitue, avec éventuellement un peu de sable une extraordinaire matrice, dont le comportement vis à vis des plantes est celui d'un sol mais qui se comporte à l'échelle macroscopique comme un tatami de judo par exemple, c'est à dire comme un solide élastique.

Ce substrat peut être moulé et comprimé jusqu'à son épaisseur d'équilibre et on peut marcher ou sauter sur sa tranche sans le détruire : la tranche peut s'écraser localement sous le poids de plusieurs centimètres et reprendre immédiatement sa place.

Plus la partie de sable est faible et plus la partie en grain résilient, particulièrement en liège, est forte, et plus la densité du substrat est faible et son coefficient d'isolation est élevé.

Pour un substrat dont le liège représente plus de 50 % en volume, les caractéristiques mécaniques du substrat ne sont presque pas affectées par le gel. On a même constaté, qu'un gazon implanté dans un substrat selon la présente invention avec une part de liège de plus de 75 % reste souple, alors que les autres sols sont gelés et durs comme pierre.

Pour un tel substrat selon l'invention, dont le liège en gros granulés représente plus de 20 % et de préférence plus de 50 %, et dont la partie sableuse a un D10 supérieur à 200 µµ, la perméabilité est telle que le substrat « boit en grand » et ne conserve à l'issue des pires précipitations que l'eau retenue par capillarité.

La combinaison de l'eau retenue par capillarité et de l'isolation thermique permet de conserver très longtemps et jusqu'à la surface une réserve en eau disponible pour les semis.

Un substrat selon la présente invention peut être caractérisé quelle qu'en soit la formulation, comme suit:
- d'une part par la proportion volumique initiale de chaque composant du mélange, à l'exception des fibres, définie comme le volume en tas du composant avant son incorporation divisé par la somme des volumes en tas de tous les composants avant leur incorporation (à l'exception des fibres) ; et,
- d'autre part par une densité pondérale de la fibre dans le mélange définie comme le poids de la fibre divisé par la somme des volumes en tas de tous les composants avant leur incorporation au mélange, à l'exception des fibres.

De façon habituelle, en analyse du sol, on considère dans un mélange les proportions pondérales (en poids sec) des différentes fractions car le poids sec du mélange est égal à la somme des poids secs des constituants alors que le volume d'un mélange n'est pas forcément égal à la somme des volumes initiaux des constituants, du fait du foisonnement ou du tassement du mélange, les petites particules pouvant « disparaître » dans la porosité des grosses particules.

De façon pratique, cependant, pour les constituants autres que la fibre, on utilise, pour caractériser le substrat, les proportions volumiques initiales telles que définies ci-dessus, de sorte que la somme des proportions volumiques initiales de l'ensemble des constituants fait bien 100 %.

L'avantage, dans le cadre de la présente invention, d'exprimer la composition du substrat en proportions volumiques initiales est triple :
- d'une part, les constituants utilisés sont choisis non gonflants, ce qui signifie que le volume du tas de chaque constituant reste le même, que le constituant soit mouillé ou sec, alors que le poids du tas change considérablement en fonction de la teneur en eau. Le volume en tas, et non le poids en tas, est donc proportionnel au poids sec de l'élément considéré.
- d'autre part le processus de dosage du sable et du liège, tel qu'il est pratiqué dans le cadre de l'invention, se fait par le volume en tas et non par le poids
- enfin, et surtout, les densités des constituants étant très différentes les unes des autres puisque par exemple le sable est 20 fois plus dense que le liège, une proportion volumique initiale hypothétique de 75 % de liège donnerait une proportion pondérale de 15 % de liège alors que 3/4 du volume est occupé par du liège et que c'est cette occupation de l'espace qui fait que le liège impose son comportement mécanique (densité du mélange, capacité d'absorption, résilience, isolation thermique, etc.) qui est donc plus lié à la proportion volumique initiale qu'à la proportion pondérale.

Dans une autre version du processus de dosage, l'asservissement du début du sable est contrôlé en fonction de la variation du poids de sable dans une trémie et l'on pourrait exprimer le rapport entre le volume de liège et le poids de sable, mais, il est plus parlant pour l'homme de l'art de considérer le rapport de volume entre le liège et le sable ; si l'on connaît le poids du sable, il suffit de diviser le poids par la densité de sable même si cette densité est choisie de façon arbitraire ou conventionnelle, pour convertir le poids du sable en volume et se ramener à une composition volumique en ce qui concerne les composants de sable et de liège.

En ce qui concerne les fibres, au contraire, on n'utilise pas le volume initial des fibres car le volume d'une même quantité de fibres peut varier dans un rapport de plus de 10 en fonction du conditionnement de ces fibres qui peuvent se comprimer fortement et occuper un petit volume ou au contraire s'ouvrir et occuper un très grand volume. Pour un type de fibre donné, c'est donc le poids de fibre qui est le paramètre le plus pratique pour connaître la quantité de fibre incorporée.

Un substrat selon la présente invention a certes pour application principale la réalisation, éventuellement in situ, de surfaces sportives, mais aussi de surfaces de terrasse ou de milieu pour la transplantation de végétaux ou de culture de gazon en bande.

L'amélioration des caractéristiques de souplesse, de moindre sensibilité au compactage et d'isolation thermique est décelable dès lors que la proportion volumique des particules résilientes dans le substrat est supérieure à 5% et le diamètre des fibres fines est inférieur à 10% de la granulométrie des particules dures de la première partie. Cette amélioration est naturellement accentuée au fur et à mesure la proportion de particules résilientes augmente Mais l'augmentation concomitante du prix de revient et la difficulté de conserver une aussi bonne cohésion au-delà de 60% font que les formules à plus de 60% en volume d'éléments résilients sont plutôt réservées aux substrats de culture pour l'aménagement de terrasses ; les formules de terrains de sport contiennent de préférence moins de 60% en volume d'éléments résilients.

Compte tenu de ces éléments, le substrat selon l'invention se décline en plusieurs formulations bien différentes en fonction des applications.

Plusieurs éléments permettent de cerner la formulation en fonction des besoins.

Le prix de revient est croissant de façon très significative avec l'augmentation de la proportion volumique PV de liège, ce qui est un premier élément de limitation du liège pour raison économique. De plus, si le liège apporte de la souplesse, il faut que les terrains gardent, selon leur destination, une certaine performance et un rebond suffisant : le terrain est plus rapide pour la course ou pour le ballon quand il est plus dur ; il faut par exemple un rebond suffisant de ballon de football ou de balle de tennis : ceci est une raison de limitation du liège pour raison technique.

Pendant une année, des expériences ont été réalisées pour améliorer le produit et tester les formulations.

Pour améliorer le produit, on a cherché différentes sources de fibres et on s'est rendu compte qu'on obtient des résultats totalement différents en terme de comportement mécanique avec des fibres assez peu différentes et des formulations exactement équivalentes par ailleurs.

L'épaisseur des fibres est un élément important, de même que son état de surface et sa longueur s'est révélée déterminante. Si les fibres, toutes choses égales par ailleurs, sont trop courtes par rapport à la dimension des grains, l'effet de stabilisation est très faible, parfois même inexistant ; plus la longueur augmente et plus les fibres sont efficaces, pour un même dosage de fibres, à condition de réussir à les maintenir démêlées, ce qui est de plus en plus difficile quand la longueur augmente.

Pour améliorer la formulation et pour incorporer des fibres aussi efficaces que possible, il a été nécessaire d'améliorer le système de défibrage, qui a pour objet de séparer les fibres, de les maintenir séparées et de les introduire bien séparées dans le milieu granulaire, au point de rencontre stratégique aménagé dans le processus de mélange.

Compte tenu de ces améliorations, il a été possible de tester de nombreuses formulations avec des fibres bien défibrées en installant sur un damier et en testant ensuite le comportement mécanique de différentes formulations obtenues, pour différents types de fibres, en faisait varier la concentration de fibres selon un axe du damier et la concentration de liège selon l'autre axe.

Des tests ont été notamment réalisés avec des longueurs de fibres de 40mm qui se sont révélées efficaces mais trop courtes pour une bonne efficacité, des fibres de 70 mm qui se sont révélées très efficaces pour obtenir un substrat souple et stable et 140 mm qui se sont révélées plus efficaces encore, surtout avec les substrats les plus liégeux.

De façon préférable, on a constaté que les autres inclusions allongées ou surfaciques qui peuvent être ajoutées aux fibres pour stabiliser le substrat sont plus efficaces si elles ont une plus grande dimension au moins supérieure à 10 fois leur plus petite dimension et au moins 10 fois supérieure à la granulométrie moyenne des particules constituant le squelette du substrat.

Dans les exemples étudiés, il a fallu choisir une description des mélanges, en tenant compte de ce qui est mesurable et des rapports entre la densité du liège et celle du sable. On a mis au point un procédé de formulation et d'asservissement de la fabrication des mélanges, caractérisé par le fait que l'on dispose de trois organes distributeurs dont on sait régler le débit, un organe distributeur de sable, un organe distributeur de liège et un organe distributeur de fibres et qu'on règle les différents débits pour obtenir une formulation égale à la proportion des débits de distribution des composants élémentaires.

Dans ce procédé, le débit de sable est caractérisé par le poids mesuré de sable transitant par unité de temps tandis que le débit de liège est caractérisé par le volume mesuré de liège passant par unité de temps et le débit de fibres est caractérisé par le poids de fibres passant par unité de temps.

On a décidé de caractériser le milieu granulaire par la proportion des volumes respectifs de sable et de liège mais une difficulté se pose pour le sable dont le volume dépend de l'état de compaction et dont on ne connaît que le poids.

Compte tenu des incertitudes de poids du fait de l'eau attachée au sable, on mesure le poids de sable humide passant par unité de temps et l'on considère dans le procédé de fabrication et d'évaluation un volume arbitraire de sable calculé à partir de son poids, en décidant arbitrairement que le « volume arbitraire » de sable est celui correspondant au poids mesuré, pour une densité arbitraire choisie, par exemple de 1,4 kg/litre de sable ; on caractérise alors la proportion volumique entre le sable et le liège en considérant que la proportion de sable est le rapport entre le volume arbitraire de sable et la somme du volume arbitraire de sable et du volume mesuré de liège, la somme des proportions volumiques de sable et de liège étant égale à 100%.

Le dosage des fibres est considéré en gramme par litre de mélange : on considère par unité de temps le rapport entre le poids de fibre apporté et le volume arbitraire du mélange égal à la somme du volume arbitraire de sable et du volume mesuré de liège dans la même unité de temps.

Ce que l'on appelle le poids de fibre par rapport au volume du mélange est en fait le rapport entre le poids de fibres apporté et le volume arbitraire de granulats défini par la somme du volume arbitraire de sable et de volume mesuré de liège.

Le procédé mis au point est ensuite caractérisé par le fait que d'une part le débit de sable est réglable et mesuré en continu par la mesure de variation de poids d'un organe de circulation du sable, par exemple en montant cet organe sur des pesons de précision et par le fait d'autre part qu'il existe un programme informatique d'asservissement des débits permettant, en fonction de la formulation recherchée, d'asservir à cette mesure du débit de sable les débits de liège et de fibre et aussi d'accélérer ou de décélérer en continu le débit de sable pour le maintenir à son débit prévu, malgré les irrégularités de débit liées aux irrégularités de frottement interne dans le circuit.

Compte tenu des progrès réalisés en terme de défibrage d'une part, de choix des fibres d'autre part et de précision des mélanges enfin, il a été possible de tester de façon systématique de nombreuses formulations. De façon surprenante, les résultats sont très sensiblement différents des résultats préliminairement obtenus avec des fibres moins adaptées, moins bien défibrées et mélangées avec une moindre précision.

De façon surprenante, les progrès réalisés sur le choix des fibres et la méthode de défibrage ont complètement bouleversé les résultats précédemment obtenus, ainsi que le montrent quelques exemples d'essais suivants.

De nombreux essais ont été réalisés sur les différents mélanges et portent sur l'aspect mécanique, sur l'aspect agronomique et hydrique et sur l'adaptation du produit à différents usages.

En particulier, des tests accélérométriques permettent de tester l'élasticité et les modes de dissipation de l'énergie cinétique tandis que d'autres tests permettent de mesurer la cohésion et l'angle de frottement interne du substrat.

L'inconvénient de ces tests est qu'ils donnent des mesures qui caractérisent bien le substrat, mais sans donner pour autant de seuil d'efficacité, qu'il s'agisse de seuil minimum ou de seuil maximum.

Nous avons pu définir, en plus des mesures scientifiques de caractérisation un test qualitatif de seuil minimum d'efficacité, très simple et qui nous semble pertinent car simple à réaliser, discriminant et reproductible, et corrélé à l'objectif de stabilité recherché. Ce test consiste, pour un substrat donné, à l'étaler sur une faible hauteur et une faible surface, à le compacter et à tenter ensuite d'y enfoncer une bêche : pour un dosage de fibres inférieur à un certain dosage qui définit le seuil d'efficacité mis en évidence par ce test, il est possible d'enfoncer la bêche, tandis qu'au dessus de ce dosage, il devient très difficile puis impossible de le faire, dès qu'on dépasse un peu ce seuil d'efficacité ; bien que dépendant dans l'absolu de la méthodologie de compactage et de l'humidité ou de la façon d'enfoncer une bêche, ce test, réalisé de façon sommaire en compactant avec les pieds, s'est révélé parfaitement reproductible, même si il n'est pas d'une grande précision et il a donc été utilisé pour déterminer le seuil minimal de fibres à incorporer dans les différents mélanges granulaires testés.

Ces tests ont permis de montrer une sensibilité aux fibres pour de faibles dosages mais avec un dosage minimum qui augmente avec la quantité de fibres.

On a observé qu'il était préférable d'avoir au moins 0,5 g/l de fibres pour observer un effet des fibres.

Il est préférable d'avoir au moins 0,5 g/l de fibres et au moins 1g/litre de la somme fibres plus inclusions pour obtenir un résultat visible avec une dose de liège supérieure à 5% et inférieure à 60%.

Il est préférable d'avoir au moins 1 g/l de fibres et au moins 2g/litre de la somme fibres plus inclusions pour obtenir un résultat visible avec une dose de liège supérieure à 60%.

De préférence, une efficacité maximale est obtenue pour un substrat ayant une dose de liège inférieure à 60% pour un dosage de fibres plus inclusions allongées ou surfaciques compris entre 2g/litre et 80 g/litre.

De préférence, une efficacité maximale est obtenue pour un substrat ayant une dose de liège supérieure à 60% pour un dosage de fibres plus inclusions allongées ou surfaciques compris entre 5g/litre et 200 g/litre.

Du coté du seuil maximum de fibre utilisable dans un mélange, il n'a pas été possible de trouver un test objectif comme pour le seuil minimum et il faut, pour déterminer la dose maximale préférable des critères non intrinsèques qui sont essentiellement la possibilité et l'intérêt de mettre plus de fibres dans chaque mélange granulaire.

Il est apparu de façon évidente que plus il y a de liège et plus il est possible d'intégrer de grandes quantités de fibres sans « bloquer « la machine de mélange et plus il est utile d'en rajouter pour stabiliser le mélange.

Les inconvénients d'en mettre trop sont :
- tout d'abord la difficulté d'incorporer la fibre sans faire caler la machine de mélange
- et la difficulté de conserver un mélange homogène qui se compacte bien,
- puis l'augmentation du coût de matière
- et la diminution du rythme de fabrication,
- puis la difficulté d'étaler le mélange et de le garder plat
- et enfin la difficulté accrue d'éviter ensuite la ségrégation de fibres en sur-nombre et mal mélangées.

De façon générale, cependant, les tests n'ont pas montré de façon évidente d'inconvénient intrinsèque rédhibitoire pour un dosage trop élevé de fibres, dès lors qu'on réussit à les incorporer ; avec les améliorations de l'outil de production, il a été possible de mélanger des doses très nettement plus importantes que ce qui avait été imaginé antérieurement, sans atteindre de dosage mettant en évidence un défaut comportemental , même si , quand la dose de fibres augmente trop :
- le substrat devient de plus en plus difficile à mettre en place
- le substrat devient de plus en plus difficile à compacter,
- le substrat nécessite de plus en plus d'eau et d'effort mécanique pour être compacté
- le substrat devient de plus en plus séchant,
- le substrat est de plus en plus sujet à la ségrégation au séchage, avec les fibres qui se détachent dans le temps à la surface du substrat
- le substrat a des caractéristiques agronomiques dégradées.

On constate qu'au delà d'un certain dosage le substrat ne se présente plus comme une matrice granulaire avec des fibres faisant le tour des grains et séparées les unes des autres par ces grains mais évolue de façon continue vers une matrice fibreuse dans laquelle sont incorporés des granulats qui sont attachés aux fibres par des forces électrostatiques ou de cohésion hydraulique et qui continue à se présenter comme un substrat de culture mais aux caractéristiques changées de façon continue et en moins intéressantes pour raisons économiques, de densité.

Il apparaît donc à la vue de ces essais nouveaux qu'il n'y a pas de test de seuil maximum comme il y a un test de seuil minimum mais qu'on constate simplement une dégradation progressive de l'intérêt d'augmenter le dosage de fibres, tant sur le plan économique que technique. Compte tenu de ces nouvelles observations, aucun test n'a permis de fixer un seuil maximum intrinsèque à ne pas dépasser, même si les considérations économiques ou les difficultés de fabrication en l'état actuel ou encore d'absence d'avantage observé à augmenter le dosage de fibres au delà d'une certaine limite permettent de fixer un dosage maximum préférable pour les différents essais réalisés.

Il n'est donc pas nécessaire de fixer un dosage maximal, même si il est toutefois souhaitable, de façon préférable, de ne pas dépasser un dosage maximum pour les utilisations en sol sportif, et particulièrement pour les dosages à forte teneur en sable car :
- d'une part au delà d'un certain seuil, le sol devient de plus en plus difficile à régler quand la dose de fibres augmente
- et parce que d'autre part le prix augmente (prix de la fibre et temps de mélange) sans que l'on n'ait réussi à observer en contre-partie d'avantage significatif en terme de stabilisation.

Pour un dosage de liège inférieur à 60%, il est préférable d'avoir un dosage de fibres inférieur à 80 g/litre.

Au delà de 60% de liège et tout particulièrement au delà de 75% et jusqu'à 100% de liège, on s'est rendu compte, avec de nouveaux essais réalisés d'une part pour une utilisation en substrat de gazon pour parking ou pour voirie carrossable et d'autre part en substrat léger pour culture en terrasse que ces usages rendent intéressant un dosage de fibres important mais avec cependant des limites maximales intrinsèques qui sont apparues.

Dans le cas des terrasses, les dosages de liège préférables se situent entre 60% et 95% (on a utilisé des substrats à 100% de liège mais le substrat se tient moins et il y a une forte ségrégation des fibres au delà de 90%).

Quand on a essayé d'augmenter le dosage de fibres au delà de 200g/m3 pour des dosages de liège de 95%, on a constaté qu'il était plus intéressant de rajouter 5% de sable et de revenir à un substrat 90% liège et 10% sable que de rajouter 70 g/ m3 de fibres car c'est sensiblement équivalent en terme de densité de substrat compacté au maximum mais avec un substrat sableux qui se compacte mieux et se tient ensuite en place alors que l'augmentation du poids de fibres augmente d'autant la densité du substrat mais en donnant un substrat qui se compacte moins bien et se tient moins bien ensuite pour un coût très largement supérieur.

Le dosage maximal préféré pour une proportion de liège supérieure à 60% est de 300 g/litre.

Dans le cas des parkings ou des voiries, il est apparu tout d'abord que l'augmentation de la proportion de liège favorise le frottement et l'effet anti-cisaillement mais qu'une densité minimum de sable est utile pour le principe d'action-réaction et le dosage de liège préférable se situe entre 40 et 70%.

Il est ensuite apparu de la même façon que la densité de fibres doit être aussi importante que possible pour créer un maximum de liens et une efficacité anti-cisaillement aussi grande que possible mais que son augmentation se heurte à l'inconvénient que la surface ne reste plus assez compacte car l'eau est nécessaire pour compacter le volume mais qu'en séchant il y a à nouveau foisonnement et déstabilisation.

Il est également apparu préférable de ne pas dépasser un dosage de 300 g /litre arbitraire de granulat.

Pour un terrain de sport de football, il est préférable de conserver une formulation très faible en liège en entrée de gamme pour raison économique ; mais il est préférable d'avoir entre 5% et 20% de liège pour améliorer la souplesse ; pour des terrains haut de gamme, il est préférable de se situer entre 20 et 40 % de liège, avec un dosage de fibres compris entre 7 et 15% pour les terrains à utilisation normalement intensive et jusqu'à 20g/l pour terrains d'entrainement très utilisés. Pour que le ballon rebondisse suffisamment, il ne faut pas dépasser 60% de liège et pour garder un terrain rapide tout en améliorant la souplesse pour les sportifs, il semble que 40% de liège soit un bon compromis.

Pour un green de golf, l'intérêt d'un substrat selon l'invention est de permettre une surface dense qui reste aérée, portante et dure, et décompactée propice à la culture du gazon avec une réserve en eau suffisante facilement utilisable. Pour accélérer le green, c'est à dire la vitesse de la balle sur le green, ce qui est généralement recherché, la proportion de liège devra être diminuée mais l'autre aspect est d'avoir des greens d'une vitesse semblable aux autres greens du golf, de sorte que la proportion de liège sera comprise de préférence entre 10 % et 40%, selon qu'on cherche la performance du green considéré ou l'homogénéité par rapport aux autres greens existants.

De même pour le tennis, la quantité de liège a une influence sur le type de jeux ; en augmentant la proportion de liège, on obtient un confort supérieur mais un rebond moins haut et une vitesse de rebond inférieure, ce qui rapproche le comportement de la surface de celle d'un terrain en terre battue copieusement arrosé alors qu'un substrat selon l'invention avec une faible proportion de liège permettra d'obtenir une surface se rapprochant d'un gazon en herbe sur terre sèche. En fonction des objectifs visés, la proportion de liège préférée sera de 0 à 20% pour une surface très rapide, entre 20% et 40% pour une surface confortable et plus lente de type terre battue et jusqu'à 60% pour une surface très confortable avec un jeu lent, convenant au tennis pratiqué pour le plaisir plutôt que pour la compétition.

Pour un terrain de rugby, la souplesse et la résistance importent plus que le rebond du ballon et le meilleur compromis se situe sur le plan technique entre 40 et 60% de liège avec 15 à 20 g/litre de substrat ou entre 20% et 40% de liège avec 10 à 15g/ litre de fibres pour un terrain d'entraînement à plus faible budget.

Les terrains de football et de rugby peuvent avoir une couche de substrat selon l'invention de 10 à 15 cm d'épaisseur ou une couche de substrat selon l'invention de 3 à 7 cm en surface, reposant sur une sous-couche de sable de perméabilité au moins égale.

A une époque où l'on se préoccupe à la fois de développement durable et de chauffer les pelouses, pour leur utilisation sportive en hiver, le liège présente un grand avantage par son caractère isotherme : il donne, de ce fait, au sol la capacité de supporter des froids plus intenses sans geler et de rester plus longtemps assez chaud pour permettre au gazon de germer ou de pousser ; en plus de ce caractère isotherme, l'aspect résilient du liège permet au sol d'encaisser la dilatation éventuelle de l'eau entre 4°C et 0°C lorsque l'eau se transforme en glace : le sol ne devient donc pas dur et pris en bloc dans le cas où l'eau présente dans le substrat se prend en glace, d'autant que le substrat selon l'invention a une très forte perméabilité et ne retient qu'une petite quantité d'eau par capillarité ; la plus grande partie de l'eau présente dans la porosité étant très rapidement évacuée par gravité si le substrat est posé, comme cela doit être le cas, sur une surface dotée d'un drainage efficace.

Ainsi, les substrats selon l'invention permettent de faire un terrain de sport utilisable en hiver sans chauffage tandis que d'autres terrains sont durs comme pierre et permet également, si un chauffage du substrat est mis en place, d'obtenir une température plus importante pour une consommation d'énergie beaucoup plus faible. Des essais réalisés ont montré que, pour une même énergie de chauffage distribuée de la même façon au même moment, le substrat selon l'invention testé avait une température supérieure de 10°C à celle du substrat témoin.

Concernant les terrains de galop, il faut des sols à la fois beaucoup plus souples, car les chevaux ont l'habitude de courir sur de l'herbe mouillée dans laquelle leurs pieds s'enfoncent de plusieurs centimètres, et très résistants pour éviter d'avoir à remettre en place les mottes, comme c'est le cas actuellement, ce travail représentant un coût très important. De ce fait, les formulations souhaitables comprennent une proportion minimale de liège, comprise entre 40 et 60% et de préférence une proportion encore supérieure, entre 60 et 80%, tout particulièrement dans les zones les plus sensibles comme les réceptions d'obstacle, avec des épaisseurs d'un tel substrat comprises au minimum entre 15 et 20 cm.

Pour les terrains d'obstacle, ceux-ci doivent être souples, mais sans trop, et doivent surtout bien restituer l'énergie : une proportion entre 10% et 40% de liège serait indiquée sur le plan technique.

Les surfaces pour le polo ou le trot doivent être plus dures encore et la proportion de liège peut être avantageusement comprise entre 5% et 20%.

Lorsque le terrain de sport, ou surface sportive, est constitué par des bacs juxtaposés, limités par des parois, on remplit ceux-ci d'un substrat selon la présente invention sur une hauteur au moins égale à celle de ces parois.

Quand le niveau du substrat dépasse le niveau de ces parois de quelques centimètres, le substrat préféré est un substrat comprenant plus de 50% de liège car la densité plus faible du substrat et son comportement de solide élastique permettent aux bords verticaux dépassant le niveau des parois et à la surface de jeux de bien se tenir, tout en garantissant la souplesse du substrat.

## Revendications

1. Substrat destiné à servir de support de culture, caractérisé :
• d'une part, en ce qu'il comprend:
- une première partie, constituant le squelette du substrat et représentant plus de 70 % du volume total dudit substrat, composée de particules P_{>100µm} d'une granulométrie supérieure à 100 µm, l'ensemble desdites particules étant constitué de particules dures P_{D>100} et de particules de liège P_{R>100}, lesdites particules de liège constituant une proportion volumique PV comprise entre 5% et 90% en volume de cette première partie ;
- une deuxième partie d'éléments corpusculaires P_{<100} d'une granulométrie inférieure à 100 µm, et constituant de 0 à 450 g/L dudit substrat ;
- une troisième partie, constituant de 0 à 200 g/L dudit substrat, composée de fibres fines d'une longueur comprise entre 3 mm et 100 mm et d'un diamètre compris entre 5 µm et 35 µm ;
- une quatrième partie, constituant de 0 à 200 g/L dudit substrat, composée d'autres inclusions allongées et/ou surfaciques, chacune de ces inclusions allongées ou surfaciques ayant au moins une de ses dimensions largement supérieure à la granulométrie des particules de la première partie,
• d'autre part, en ce que la somme des dosages de la troisième partie et de la quatrième partie est supérieure à 1 g/L dudit substrat.

2. Substrat selon la revendication 1, **caractérisé en ce que**, pour une proportion volumique PV de particules de liège P_{R>100} comprise entre 5 % et 60 %, le dosage D_{F} des fibres fines est supérieur à 1g/Litre de substrat, et que la somme du dosage D_{F} des fibres fines et du dosage D_{Al} de toutes les autres inclusions de la quatrième partie est inférieure à 80 g/Litre de substrat.

3. Substrat selon la revendication 1, **caractérisé en ce que**, pour une proportion volumique PV de particules de liège P_{R>100} supérieure à 60 %, la somme du dosage D_{F} des fibres et du dosage D_{Al} de toutes les autres inclusions de la quatrième partie est comprise entre 7 g /L de substrat et 40 g /L de substrat.

4. Substrat selon la revendication 1, **caractérisé par le fait que**, pour une proportion volumique PV de particules de liège P_{R>100} inférieure à 60 %, la somme du dosage D_{F} des fibres fines et du dosage D_{Al} de toutes les autres inclusions de la quatrième partie est comprise entre 2 g/litre de substrat et 80 g /litre de substrat.

5. Substrat selon la revendication 1, **caractérisé en ce que**, pour une proportion volumique PV de particules de liège P_{R>100} supérieure à 60 %, la somme du dosage D_{F} des fibres fines et du dosage D_{Al} de toutes les autres inclusions de la quatrième partie est comprise entre 5 g/Litre de substrat et 200 g /litre de substrat.

6. Substrat selon la revendication 1, **caractérisé par le fait que** les particules dures de la première partie sont des particules de sable.

7. Substrat selon la revendication 1, **caractérisé par le fait que** les particules dures de la première partie sont des particules de sable siliceux.

8. Substrat selon la revendication 1, **caractérisé en ce que** les éléments corpusculaires de la deuxième partie sont constitués d'argile, de limon, de sable très fin dont la granulométrie est inférieure à 100 µm, de matière organique, d'éléments poreux fins tels que de la poudre de zéolithe, de corail ou de diatomées.

9. Substrat selon la revendication 1, **caractérisé en ce que** les éléments corpusculaires de la deuxième partie ayant une dimension inférieure à 20 µm représentent moins de 60 g/L de substrat et que les éléments corpusculaires de la deuxième partie ayant une dimension inférieure à 100 µm représentent moins de 300 g/L dudit substrat.

10. Substrat selon la revendication 1, **caractérisé en ce que** les éléments corpusculaires de la deuxième partie ayant une dimension inférieure à 80 µm représentent moins de 45 g/L de substrat.

11. Substrat selon la revendication 1, **caractérisé par le fait que** l'ensemble de toutes les particules de dimension supérieure à 180 µm et inférieure à 100 µm représente moins de 1000 g/L de substrat.

12. Substrat selon la revendication 1, **caractérisé en ce qu'**au moins 20% en poids des fibres fines de la troisième partie sont des fibres creuses en polyester.

13. Substrat selon la revendication 1, **caractérisé en ce qu'**au moins 20% en poids des fibres de la troisième partie sont enrobées d'un produit hydrophobe lubrifiant.

14. Substrat selon la revendication 13, **caractérisé en ce que** le produit hydrophobe lubrifiant est du silicone.

15. Substrat selon la revendication 1, **caractérisé en ce que** plus de 50% du poids des fibres fines de la troisième partie est constitué par des fibres fines dont le diamètre est inférieur à 10% de la granulométrie moyenne des particules dures de la première partie dudit substrat.

16. Substrat selon la revendication 1 **caractérisé en ce que** les inclusions surfaciques ou allongées de la quatrième partie ont une plus grande dimension supérieure à 10 fois leur plus petite dimension et au moins 10 fois supérieure à la granulométrie moyenne des particules constituant le squelette du substrat.

17. Substrat selon la revendication 1, **caractérisé en ce que** les fibres de la troisième partie sont des fibres de polyester et que les autres inclusions de la quatrième partie sont du tissu de coton.

18. Substrat selon la revendication 1, **caractérisé en ce que** le substrat comprend des fibres d'une longueur supérieure à 20 mm.

19. Substrat selon la revendication 1, **caractérisé en ce que** le substrat comprend des fibres d'un diamètre supérieur à 10 µm.

20. Substrat selon la revendication 1, **caractérisé en ce que** plus de 50% des fibres contenues dans le substrat ont un diamètre inférieur à 10% de la granulométrie moyennes des particules dures.

21. Substrat selon la revendication 1, **caractérisé en ce qu'**au moins 50% des fibres contenues dans le substrat ont un diamètre inférieur à D50/10, D50 étant le diamètre des particules dures au-dessous duquel on a 50% de la masse des particules dures du substrat.

22. Substrat selon la revendication 1, **caractérisé en ce que**, d'une part, plus de 80% en poids des particules dures présente une granulométrie comprise entre 200 µm et 400 µm, et que, d'autre part, les fibres fines de la troisième partie sont des fibres creuses de polyester, d'un diamètre compris entre 12 et 30 µm.

23. Application du substrat selon l'une quelconque des revendications 1 à 22 à la réalisation, éventuellement in situ, de surfaces sportives, de surfaces de terrasse, de milieu pour la transplantation de végétaux ou de culture de gazon en bande.

24. Application selon la revendication 23, **caractérisée en ce que** la surface sportive est constituée par des bacs juxtaposés, limités par des parois, et remplis dudit substrat à une hauteur au moins égale à celle desdites parois.

## Patentansprüche

1. Substrat für Bepflanzung, gekennzeichnet:
• einerseits, dass es umfasst:
- einen ersten Teil, welcher das Skelett des Substrats bildet und über 70 % des Gesamtvolumens des Substrats darstellt, zusammengesetzt aus Partikeln P_{>100µm} mit einer Korngröße über 100 µm, wobei die Gesamtheit der Partikel von harten Partikeln P_{D>100} und/oder von Korkpartikeln P_{R>100} gebildet ist, wobei die Korkpartikel einen Volumenanteil PV zwischen 5 und 90 Vol.-% inklusive des ersten Teils bilden,
- einen zweiten Teil von Korpuselementen P_{<100} mit einer Korngröße unter 100 µm, der 0 bis 450 g/L des Substrats beträgt,
- einen dritten Teil, der 0 bis 200 g/L des Substrats beträgt, zusammengesetzt aus feinen Fasern mit einer Länge zwischen 3 mm und 100 mm inklusive und einem Durchmesser zwischen 5 µm und 35 µm inklusive,
- einen vierten Teil, der 0 bis 200 g/L des Substrats beträgt, zusammengesetzt aus länglichen und/oder oberflächlichen Einschlüssen, wobei eine der Abmessungen jeder dieser länglichen oder oberflächlichen Einschlüsse sehr viel größer ist als die Korngröße der Partikel des ersten Teils,
• andererseits, dass die Summe der Dosierungen des dritten Teils und des vierten Teils über 1 g/L des Substrats beträgt.

2. Substrat nach Anspruch 1, **dadurch gekennzeichnet, dass** für einen Volumenanteil PV von Korkpartikeln P_{R>100} zwischen 5 % und 60 % inklusive die Dosierung D_{F} der feinen Fasern mehr als 1 g/Liter Substrat beträgt und dass die Summe der Dosierung D_{F} der feinen Fasern und der Dosierung D_{Al} aller anderen Einschlüsse des vierten Teils weniger als 80 g/Liter Substrat beträgt.

3. Substrat nach Anspruch 1, **dadurch gekennzeichnet, dass** für einen Volumenanteil PV von Korkpartikeln P_{R>100} über 60 % die Summe der Dosierung D_{F} der feinen Fasern und der Dosierung D_{Al} aller anderen Einschlüsse des vierten Teils zwischen 7 g/L Substrat und 40 g/Liter Substrat inklusive beträgt.

4. Substrat nach Anspruch 1, **dadurch gekennzeichnet, dass** für einen Volumenanteil PV von Korkpartikeln P_{R>100} unter 60 % die Summe der Dosierung D_{F} der feinen Fasern und der Dosierung D_{Al} aller anderen Einschlüsse des vierten Teils zwischen 2 g/L Substrat und 80 g/Liter Substrat inklusive beträgt.

5. Substrat nach Anspruch 1, **dadurch gekennzeichnet, dass** für einen Volumenanteil PV von Korkpartikeln P_{R>100} über 60 % die Summe der Dosierung D_{F} der feinen Fasern und der Dosierung D_{Al} aller anderen Einschlüsse des vierten Teils zwischen 5 g/Liter Substrat und 200 g/Liter Substrat inklusive beträgt.

6. Substrat nach Anspruch 1, **dadurch gekennzeichnet, dass** die harten Partikel des ersten Teils Sandpartikel sind.

7. Substrat nach Anspruch 1, **dadurch gekennzeichnet, dass** die harten Partikel des ersten Teils siliziumhaltige Sandpartikel sind.

8. Substrat nach Anspruch 1, **dadurch gekennzeichnet, dass** die Korpuselemente des zweiten Teils von Ton, von Schluff, von sehr feinem Sand, dessen Korngröße unter 100 µm ist, von organischer Materie, von feinen porösen Elementen wie Zeolith-, Korallen- oder Kieselalgenpulver gebildet sind.

9. Substrat nach Anspruch 1, **dadurch gekennzeichnet, dass** die Korpuselemente des zweiten Teils, die eine Abmessung unter 20 µm haben, weniger als 60 g/L Substrat darstellen und dass die Korpuselemente des zweiten Teils, die eine Abmessung unter 100 µm haben, weniger als 300 g/L des Substrats darstellen.

10. Substrat nach Anspruch 1, **dadurch gekennzeichnet, dass** die Korpuselemente des zweiten Teils mit einer Abmessung unter 80 µm weniger als 45 g/L Substrat darstellen.

11. Substrat nach Anspruch 1, **dadurch gekennzeichnet, dass** die Gesamtheit aller Partikel mit einer Abmessung über 180 µm und unter 100 µm weniger als 1000 g/L Substrat darstellen.

12. Substrat nach Anspruch 1, **dadurch gekennzeichnet, dass** mindestens 20 Gew.-% der feinen Fasern des dritten Teils hohle Fasern aus Polyester sind.

13. Substrat nach Anspruch 1, **dadurch gekennzeichnet, dass** mindestens 20 Gew.-% der Fasern des dritten Teils von einem schmierenden hydrophoben Produkt umgeben sind.

14. Substrat nach Anspruch 13, **dadurch gekennzeichnet, dass** das schmierende hydrophobe Produkt Silikon ist.

15. Substrat nach Anspruch 1, **dadurch gekennzeichnet, dass** über 50 Gew.-% der feinen Fasern des dritten Teils von feinen Fasern gebildet ist, deren Durchmesser 10 % kleiner als die mittlere Korngröße der harten Partikel des ersten Teils des Substrats ist.

16. Substrat nach Anspruch 1, **dadurch gekennzeichnet, dass** die oberflächlichen oder länglichen Einschlüsse des vierten Teils eine 10 Mal größere Abmessung als ihre kleinste Abmessung und mindestens 10 Mal größer als die mittlere Korngröße der Partikel haben, welche das Skelett des Substrats darstellen.

17. Substrat nach Anspruch 1, **dadurch gekennzeichnet, dass** die Fasern des dritten Teils Polyesterfasern sind und dass die anderen Einschlüsse des vierten Teils Baumwollgewebe sind.

18. Substrat nach Anspruch 1, **dadurch gekennzeichnet, dass** das Substrat Fasern mit einer Länge von über 20 mm umfasst.

19. Substrat nach Anspruch 1, **dadurch gekennzeichnet, dass** das Substrat Fasern mit einem Durchmesser von über 20 µm umfasst.

20. Substrat nach Anspruch 1, **dadurch gekennzeichnet, dass** über 50 % der im Substrat enthaltenen Fasern einen Durchmesser 10 % kleiner als die mittlere Korngröße der harten Partikel haben.

21. Substrat nach Anspruch 1, **dadurch gekennzeichnet, dass** mindestens 50 % der im Substrat enthaltenen Fasern einen Durchmesser kleiner als D50/10 haben, wobei D50 der Durchmesser der harten Partikel ist, unter dem man 50 % der Masse der harten Partikel des Substrats hat.

22. Substrat nach Anspruch 1, **dadurch gekennzeichnet, dass** zum einen mehr als 80 Gew.-% der harten Partikel eine Korngröße zwischen 200 µm und 400 µm inklusive aufweisen und dass zum anderen die feinen Fasern des drittens Teils hohle Fasern aus Polyester mit einem Durchmesser zwischen 12 und 30 µm inklusive sind.

23. Anwendung des Substrats nach einem der Ansprüche 1 bis 22 für die Herstellung, eventuell in situ, von Sportflächen, von Terrassenflächen, von Milieu für die Transplantation von Pflanzen oder von Kulturrasen als Streifen.

24. Anwendung nach Anspruch 23, **dadurch gekennzeichnet, dass** die Sportfläche von nebeneinanderstehenden Behältern gebildet ist, die von Wänden begrenzt sind, und mit dem Substrat in einer Höhe gefüllt sind, die mindestens der Höhe der Wände entspricht.

## Claims

1. A substrate intended to be used as a culture support, characterized:
• on the one hand, in that it comprises:
- a first portion, of the substrate forming the skeleton of the substrate and representing more than 70% of the total volume of said substrate, consisting of particles P_{>100µm} with a grain size greater than 100 µm, the whole of said particles consisting of hard particles P_{D>100} and of cork particles P_{R>100}, said cork particles making up a volume proportion PV comprised between 5% and 90% by volume of this first portion;
- a second portion of corpuscle elements P_{<100} with a grain size of less than 100µm, and making up from 0 to 450g/L of said substrate;
- a third portion, making up from 0 to 200g/L of said substrate, consisting of thin fibers with a length comprised between 3 mm and 100 mm and with a diameter comprised between 5 µm and 35 µm;
- a fourth portion, making up from 0 to 200g/L of said substrate, consisting of elongated and/or surface inclusions, each of these elongated or surface inclusions having at least one of its dimensions considerably greater than the grain size of the particles of the first portion,
• on the other hand, in that the sum of the dosages of the third portion and of the fourth portion is less than 1 g/L of said substrate.

2. The substrate according to claim 1, **characterized in that**, for a volume proportion PV of cork particles P_{R>100} comprised between 5% and 60%, the dosage D_{F} of thin fibers is greater than 1g/liter of substrate, and **in that** the sum of the dosage D_{F} of thin fibers and of the dosage D_{Al} of all the other inclusions of the fourth portion is less than 80g/liter of substrate.

3. The substrate according to claim 1, **characterized in that**, for a volume proportion PV of cork particles P_{R>100} greater than 60%, the sum of the dosage D_{F} of fibers and of the dosage D_{Al} of all the other inclusions of the fourth portion is comprised between 7g/L of substrate and 40g/L of substrate.

4. The substrate according to claim 1, **characterized by** the fact that, for a volume proportion PV of cork particles P_{R>100} of less than 60%, the sum of the dosage D_{F} of fibers and of the dosage D_{Al} of all the other inclusions of the fourth portion is comprised between 2 g/liter of substrate and 80 g/liter of substrate.

5. The substrate according to claim 1, **characterized in that**, for a volume proportion PV of cork particles P_{R>100} of greater than 60%, the sum of the dosage D_{F} of thin fibers and of the dosage D_{Al} of all the other inclusions of the fourth portion is comprised between 5 g/liter of substrate and 200 g/liter of substrate.

6. The substrate according to claim 1, **characterized by** the fact that the hard particles of the first portion are sand particles.

7. The substrate according to claim 1, **characterized by** the fact that the hard particles of the first portion are siliceous sand particles.

8. The substrate according to claim 1, **characterized in that** the corpuscle elements of the second portion consists of clay, silt, very fine sand, for which the grain size is less than 100 µm, of organic material, of thin porous elements such as zeolite powder, coral powder or diatoms.

9. The substrate according to claim 1, **characterized in that** the corpuscle elements of the second portion having a dimension of less than 20µm represent less than 60 g/L of substrate and that the corpuscle elements of the second portion having a dimension of less than 100 µm represent less than 300 g/L of said substrate.

10. The substrate according to claim 1, **characterized in that** the corpuscle elements of the second portion having a dimension of less than 80µm represent less than 45 g/L of substrate.

11. The substrate according to claim 1, **characterized by** the fact that the whole of all the particles with a dimension greater than 180 µm and of less than 100 µm represents less than 1,000 g/L of substrate.

12. The substrate according to claim 1, **characterized in that** at least 20% by weight of the thin fibers of the third portion are hollow polyester fibers.

13. The substrate to claim 1, **characterized in that** at least 20% by weight of the fibers of the third portion of coated with a lubricating hydrophobic product.

14. The substrate according to claim 13, **characterized in that** the lubricating hydrophobic product is silicone.

15. The substrate according to claim 1, **characterized in that** more than 50% by weight of the thin fibers of the third portion is formed by thin fibers, for which the diameter is less then 10% of the average grain size of the heart particles of the first portion of said substrate.

16. The substrate according to claim 1, **characterized in that** the surface or elongated inclusions of the fourth portion have a larger dimension greater than 10 times their smallest dimension and at least 10 times greater than the average grain size of the particles making up the skeleton of the substrate.

17. The substrate according to claim 1, **characterized in that** the fibers of the third portion are polyester fibers and that the other inclusions of the fourth portion are cotton fabric.

18. The substrate according to claim 1, **characterized in that** the substrate comprises fibers with a length greater than 20 mm.

19. The substrate according to claim 1, **characterized in that** the substrate comprises fibers with a diameter greater than 10 µm.

20. The substrate according to claim 1, **characterized in that** at least 50% of the fibers contained in the substrate have a diameter of less than 10% of the average grain size of the hard particles.

21. The substrate according to claim 1, **characterized in that** at least 50% of the fibers contained in the substrate have a diameter of less than D50/10, D50 being the diameter of the hard particles below which one has 50% of the mass of the hard particles of the substrate.

22. The substrate according to claim 1, **characterized in that** on the one hand, more than 80% by weight of the hard particles have a grain size comprised between 200 µm and 400 µm, and that on the other hand, the thin fibers of the third portion are hollow polyester fibers.

23. The application of the substrate according to any of claims 1 to 22, to the production, optionally *in situ*, of sports surfaces, terrace surfaces, of a medium for transplanting plants or grass turf in strips.

24. The application of the substrate according to claim 23, **characterized in that** the sports surface is formed with juxtaposed pans, limited by walls and filled with said substrate to a height at least equal to that of said walls.
